# EUROPÄISCHE PATENTANMELDUNG

(11) **EP 2 400 062 A2**
(43) Veröffentlichungstag der Anmeldung: **28.12.2011**
(21) Anmeldenummer: 11005118.2
(22) Anmeldetag: 23.06.2011
(51) Int. Cl.: E02B 7/42

(54) **Antriebssystem für Segmenttore**

(30) Priorität: 23.06.2010 DE 102010024815; 24.05.2011 DE 102011103017
(71) Anmelder: Spezialbau Engineering GmbH, 39104 Magdeburg (DE)
(72) Erfinder: Dr. Jenrich, Holger, 39245 Gommern (DE)
(74) Vertreter: Schuster, Müller & Partner

(57) **Zusammenfassung**

Antriebssystem von Segmenttoren für Tröge von Schiffshebewerken, Schleusenkammern und Rückhaltebecken, bei dem die Funktionselemente des Antriebes in einem Arbeitsraum seitlich vom Schiffstrog/Schlcusenkammer/ Rückhaltebecken vorgesehen, über eine Antriebswelle mit dem jeweiligen Segmenttor verbunden sind und bei Ansteuerung des Antriebssystems das Segmenttor in die Arbeitspositionen - Segmenttor geschlossen -,
- Segmenttor geöffnet -, - Segmenttor in Revisionsstellung -,
- Segmenttor in Zwischenposition - verschwenkbar ist, gekennzeichnet durch ein aus einem Linearantrieb (2), einem Führungsstab (3), einer Koppelstange (4) und einem Hebel (5) bestehendes Kurbelgetriebe (6), wobei das Kurbelgetriebe (6) über den Hebel (5) und das Segmenttor (1) über Tragarme (7), welche fest am Segmenttor (1) angeordnet sind, drehfest mit der Antriebswelle (8) des Segmenttores (1) verbunden sind, wobei die Schubstange (13) vom Linearantrieb (2), die Koppelstange (4) sowie der Führungsstab (3) gelenkig verbunden sind, der Führungsstab (3) im Lagerbock (14) und die Koppelstange (4) schwenkbar am Hebel (5) angeordnet sind und das Segmenttor (1) in einem Bewegungshub des Kurbelgetriebes (6) in die jeweils gewünschte Arbeitsposition verbracht wird.

## Beschreibung

### Antriebssystem für Segmenttore

Die Erfindung bezieht sich auf ein Antriebssystem für Segmenttore, welche in Schiffshebewerken, Schleusenkammern und Rückhaltebecken zum Einsatz kommen, wobei die Segmenttore über ein Trag- und Stützsystem in Querrichtung zum Trog, zur Schleusenkammer oder einem Rückhaltebecken angeordnet sind.

Segmenttore als auch Klapptore zum Öffnen und Verschließen von Trögen und Haltungsabschlüssen von Schiffshebewerken, von Schleusenkammern sowie von Rückhaltebecken sind allgemein bekannt. Diese Tore sind gekennzeichnet zum einen durch ihre Ausbildung selbst und zum anderen durch die Anordnung des jeweiligen Tores sowie deren Funktionselemente für das Öffnen und Schließen.

Ein hydraulischer Antrieb für senkrecht zur Drehachse gefedert gelagerte Stemm- oder Schlagtore ist mit der DE 1111 105 B 1 bekannt geworden, bei dem die empfindlichen Teile aus dem Bereich der Schleusenkammer herausverlegt sind und keine Belastung der seitlichen Anschlagdichtungen durch die Hydraulik hervorgerufen wird. Dies wird dadurch erreicht, dass bei einem hydraulischen Antrieb der angegebenen Art der Winkelhebel zur Betätigung des jeweiligen Torflügels nahe der oder konzentrisch zur Drehachse des Torflügels drehbar gelagert ist und der andere Hebelarm über Mitnehmer an dem Torflügel angreift. Es wird sodann darauf verwiesen, dass ein so ausgebildeter hydraulischer Antrieb den Vorteil hat, dass keine beweglichen Antriebsteile außerhalb des Tores in die Kammer hineinragen und dass ferner die Dichtung bei der Öffnung des Tores geschont wird.

Ein Schleusentor für eine Schifffahrtsschleuse zum Schleusen von Schiffen in einer Schleusenkammer zwischen einem Unterwasserspiegel und einem Oberwasserspiegel, wobei die Stufenhöhe der Schleuse größer als die lichte Durchfahrtshöhe der zu schleusenden Schiffe ist, beschreibt die 10 2005 026 542 A1, bei der das Schleusentor aus um eine Schwenkachse schwenkbaren Flügeln besteht, wobei wenigstens ein Flügel ein sich bis oberhalb des Oberwasserspiegels erstreckendes Torsionselement zur Einleitung eines die Schwenkbewegung auslösenden Drehmoments aufweist.

Es wird dann weiter ausgeführt, dass zwei dichtend zusammenwirkende Flügel vorgesehen sind, deren Schwenkachsen an gegenüberliegende Seitenwände der Schleusenkammer verlaufen.

Verschlüsse an Schiffströgen von Schiffshebewerken werden in bekannter Art und Weise u. a. mit Trogtoren und Haltungstoren ausgebildet, wobei das jeweilige Trogtor mit dem zugehörigen Haltungstor eines Schiffstroges gekoppelt ist und über einen vorgesehenen Antrieb gemeinsam geöffnet oder geschlossen werden.

So beschreibt die DE 1, 183 862 B 1 die Ausbildung und Anordnung von einem Trogtor zu einem Haltungstor, bei dem die beiden Tore dadurch miteinander gekoppelt sind, dass das Trogtor in das Haltungstor einschiebbar ist, somit auf den üblichen Spalt zwischen den Toren verzichtet werden kann, der bei bisherigen derart ausgebildeten Torabschlüssen mit Wasser zu befüllen war.

Durch diese Lösung soll zum einen ein Verlust von Spaltwasser vermieden werden und es wird ferner ausgeführt, dass auf Hilfsmittel zur Kopplung der beiden Tore bei der vorgestellten Lösung verzichtet werden kann, da das Haltungstor selbst als Kopplungselement dient. Nachteilig bei dieser Lösung ist, dass die beiden Tore an den vorgesehenen Dichtungsrahmen anzupressen sind, um ein mögliches Dichtschließen der Tore zu erreichen, damit halt kein Wasser aus dem Schiffstrog auslaufen kann, was aber nur mit erheblichen technischen Mitteln und Aufwendungen zu realisieren ist. Dies betrifft auch die technische Ausführbarkeit des Haltungstores, welches als Aufnahmetor für das Trogtor dient.

Bei neueren Ausführungen von Schleusen und Rückhaltebecken, aber auch von Schiffshebewerken, steht die Forderung, die Tore zum Verschließen so auszubilden, dass sie über den Antrieb sowohl in eine geöffnete Position, eine geschlossene Position und in eine Revisionsposition verbracht werden können.

Derartige Antriebssysteme sind so ausgebildet, dass das jeweilige Tor über einen Arbeitszylinder mit einem Antriebsmotor in Verbindung steht und bei dessen Betätigung das Tor über diese Antriebsanordnung in einen begrenzten Bereich verschwenkt werden kann. Danach wird eine Demontage bzw. ein Umpositionieren des Antriebssystems zum Schwenktor/Segmenttor erforderlich, um dann auch die erforderlichen weiteren Schwenkbewegungen für die Verstellung des Tores einleiten zu können.

Das bei diesen Antriebssystemen notwendige Umpositionieren der einzelnen Funktionselemente zum Verstellen in die gewünschte Position ist aber nur mit hohem technischen Aufwand und mit den damit verbundenen hohen Herstellungs- und Montagekosten verbunden.

Der vorliegenden Erfindung liegt die Aufgabe zugrunde, ein Antriebssystem für Segmenttore derart weiterzuentwickeln und bereitzustellen, mit dem mit verringertem technischen und ökonomischen Aufwand die Verstellung von Segmenttoren in den gewünschten Positionen - Segmenttor geschlossen -, - Segmenttor geöffnet -, - Segmenttor in Revisionsstellung - und in gewünschten Zwischenstellungen kontinuierlich, stufenlos und zuverlässig erfolgen kann.

Diese Aufgabe wird gemäß der Erfindung mit den Merkmalen des Anspruchs 1 gelöst. Weitere vorteilhafte Lösungen und besondere Ausgestaltungen sind in den Unteransprüchen angegeben.

Der Gegenstand der vorgestellten Erfindung bezieht sich auf ein Antriebssystem von Segmenttoren, mit denen Tore von Schiffströgen, Schleusenkammern und Rückhaltebecken verschlossen, geöffnet oder in eine gewünschte andere Position, so in eine Revisionsstellung, verbracht werden können.

Dies wird durch ein Antriebssystem gelöst, das aus einem Kurbelgetriebe besteht, welches mit einem Linearantrieb ausgebildet und welches über Tragarme mit dem jeweiligen Segmenttor verbunden ist und bei Ansteuerung des Linearantriebes ein Bewegungshub des Kurbelgetriebes ausgeführt wird, mit dem das Segmenttor in jede gewünschte Arbeitsposition, so in die Positionen - das Segmenttor ist geschlossenen, - das Segmenttor ist geöffnet -, das Segmenttor befindet sich in der Revisionsstellungsposition oder in einer Zwischenstellung. Dieses Verschwenken des Segmenttores in die gewünschte Arbeitsposition wird jeweils durch einen Bewegungshub des Kurbelgetriebes erreicht, ohne dass zusätzliche Umrüstarbeiten notwendig werden, um das Segmenttor in die geforderte oder gewünschte Arbeitsposition zu verbringen.

Bei Ansteuerung des Antriebssystems, abhängig von der zu erreichenden Position des Segmenttores, wird die Schubstange des Linearantriebes in Funktion gesetzt und die Kinematik des Kurbelgetriebes bewirkt dabei, dass bei einem Bewegungshub des Kurbelgetriebes das Segmenttor, beispielsweise aus der geschlossenen Position, um 90 ° nach unten verschwenkt wird und so die geöffnete Position einnimmt oder bei entgegen gesetzter Ansteuerung des Linearantriebes das Segmenttor aus der geschlossenen Position in die Revisionsposition, um 90 ° nach oben versetzt, verbracht wird.

Dies wird erreicht durch die Ausbildung des Kurbelgetriebes, welches aus den Funktionselementen des Linearantriebes mit zugeordneter Schubstange, einem Führungsstab und einer Koppelstange besteht, wobei die Schubstange des Linearantriebes, der Führungsstab und die Koppelstange gelenkig miteinander verbunden sind. Auf den gegenüberliegenden Seiten ist der Führungsstab in einem Lagerbock angeordnet und die Koppelstange über einen Hebel mit der Antriebswelle des Segmenttores verbunden.

Das Segmenttor selbst ist dabei über Tragarme fest mit der Antriebswelle verbunden, so dass es bei Inbetriebsetzung des Kurbelgetriebes möglich ist, je nach Bewegungsrichtung des Linearantriebes, das Segmenttor in die gewünschten Arbeitsstellungen zu verschwenken.

Die Ausbildung des Kurbelgetriebes und dessen Anordnung zu dem Segmenttor gewährleisten, dass zum Erreichen der gewünschten Positionen des Segmenttores jeweils nur ein Bewegungshub der Schubstange des Linearantriebes erforderlich ist, da das Antriebssystem so gestaltet und angeordnet ist, dass die Bewegungsabläufe des Kurbelgetriebes seitlich der Antriebswelle und des Segmenttores vorbeigeführt werden, somit ein ungestörtes Öffnen/Verschließen des Segmenttores gegeben ist. Gleiches trifft zu für die Verbringung des Segmenttores in die Revisionsstellung sowie in eine Zwischenstellung. Gemäß der Erfindung sind die Schubstange, der Führungsstab und die Koppelstange in einer ersten Ausführung in einem Gelenkpunkt und in einer zweiten Ausführung über ein Koppelelement gelenkig verbunden. Bei der zweiten Ausführung der Ausbildung des Kurbelgetriebes ist das Koppelelement einmal fest mit der Schubstange verbunden und die beiden anderen Funktionselemente, Koppelstange und Führungsstab, gelenkig am Koppelelement angeordnet.

Eine weitere Anordnung des Koppelelementes erfolgt über eine feste Verbindung zum Führungsstab und die Schubstange und Koppelstange sind bei dieser Ausbildung gelenkig mit dem Koppelement verbunden. Es gehört auch zur Erfindung, dass das Koppelelement fest mit der Koppelstange und am Koppelelement die Schubstange und der Führungsstab gelenkig angeordnet sind.

Die Ausbildung des Kurbelgetriebes und seine Zuordnung zu dem Segmenttor begründen die wesentlichen Vorteile dieses Antriebssystems, da lediglich mit einem Bewegungshub des Kurbelgetriebes die erforderliche oder gewünschte Position des Segmenttores erreicht werden kann, ohne dass zusätzliche Umrüstarbeiten der einzelnen Elemente des Antriebssystems notwendig werden.

Die vorgestellte Erfindung soll mit nachfolgendem Ausführungsbeispiel näher erläutert werden.

In der dazugehörigen Zeichnung zeigen:
- Figur 1:: die Ausbildung des Kurbelgetriebes und die Verbindung von Schubstange, Führungsstab und Koppelstange in einem Gelenkpunkt bei geschlossenem Segmenttor,

- Figur 2:: das Kurbelgetriebe nach Figur 1, das Segmenttor in der geöffneten Position und die Verstellposition des Kurbelgetriebes nach dem Verschwenken des Segmenttores,
- Figur 3:: das Kurbelgetriebe nach Figur 1, das Segmenttor in einer weiteren Position, in der Revisionsposition, und die Verstellposition des Kurbelgetriebes,
- Figur 4:: die Anordnung des Koppelelementes am Führungsstab und die Anordnung von Schubstange und Koppelstange am Koppelelement,
- Figur 5:: eine weitere Anordnung des Koppelelementes am Führungsstab und die Anordnung von Schub- und Koppelstange am Koppelelement,
- Figur 6:: die Anordnung des Koppelelementes am Führungsstab sowie die Anordnung von Schub- und Koppelstange am Koppelelement,
- Figur 7:: eine weitere Ausbildung des Koppelelementes, dessen Anordnung zur Koppelstange sowie die Anordnung von Schubstange und Führungsstab am Koppelelement.

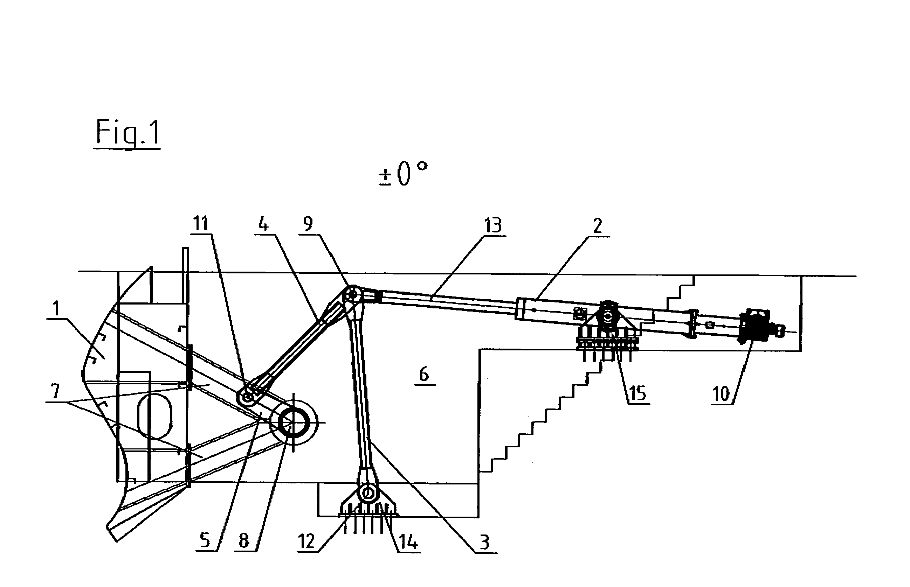

In der Figur 1 ist im weitesten Sinne die Ausgangsposition des Antriebssystems für das Öffnen und Verstellen von Segmenttoren 1 dargestellt, aus der gleichfalls die Ausbildung des Kurbelgetriebes 6 ersichtlich ist. Das Kurbelgetriebe 6 besteht aus einem Linearantrieb 2 mit Schubstange 13, einem Führungsstab 3, einer Koppelstange 4 und einem Hebel 5. Über den Hebel 5 ist das Kurbelgetriebe 6 fest mit der Antriebswelle 8 des Segmenttores 1 verbunden. Der Führungsstab 3 ist schwenkbar im Lagerbock 14 gelagert und der Linearantrieb 2 ist schwenkbar im Lagerbock 15 angeordnet. Die Verbindung von Schubstange 13, Führungsstab 3 und der Koppelstange 4 erfolgt im Gelenkpunkt 9, in dem diese drei Funktionselemente beweglich gelagert und miteinander gelenkig verbunden sind.

Die Antriebswelle 8 ist drehfest mit dem Segmenttor 1 über Tragarme 7 verbunden und gleichfalls fest an der Antriebswelle 8 ist der Hebel 5 befestigt, welcher auf der anderen Seite gelenkig im Gelenkpunkt 11 mit der Koppelstange 4 verbunden ist. Die Verbindung des Führungsstabes 3 zum Lagerbock 14 ist so ausgebildet, dass der Führungsstab 3 im Gelenkpunkt 12 des Lagerbocks 14 bewegbar ist. Ähnlich ist die Ausbildung und die Anordnung des Linearantriebes 2 zum Lagerbock 15 gestaltet, dies derart, dass der Linearantrieb 2 fest im Lagerbock 15, aber schwenkbar um seine Achse gelagert ist. Die In-Funktionssetzung des Kurbelantriebs 6 erfolgt über die Ansteuerung des Motors 10 vom Linearantrieb 2.

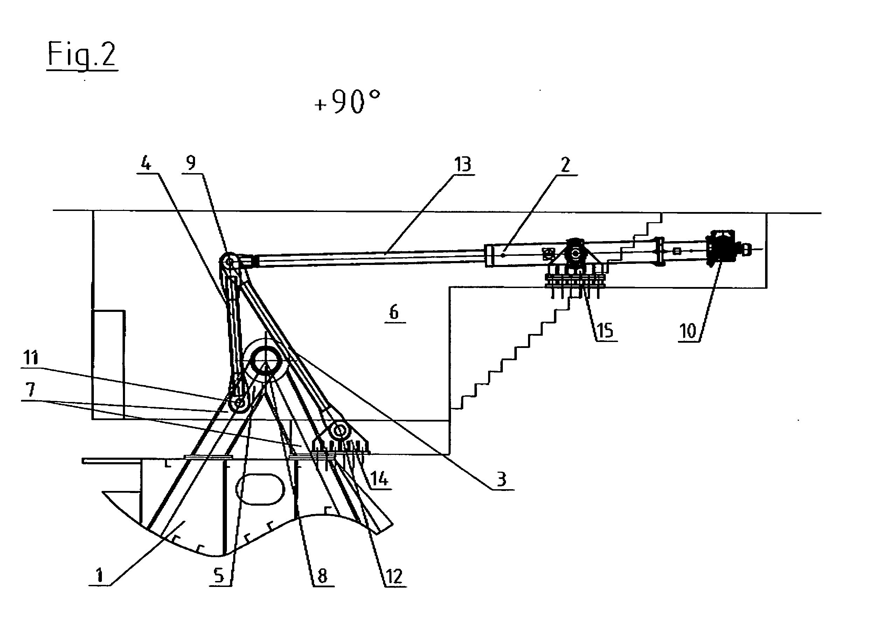

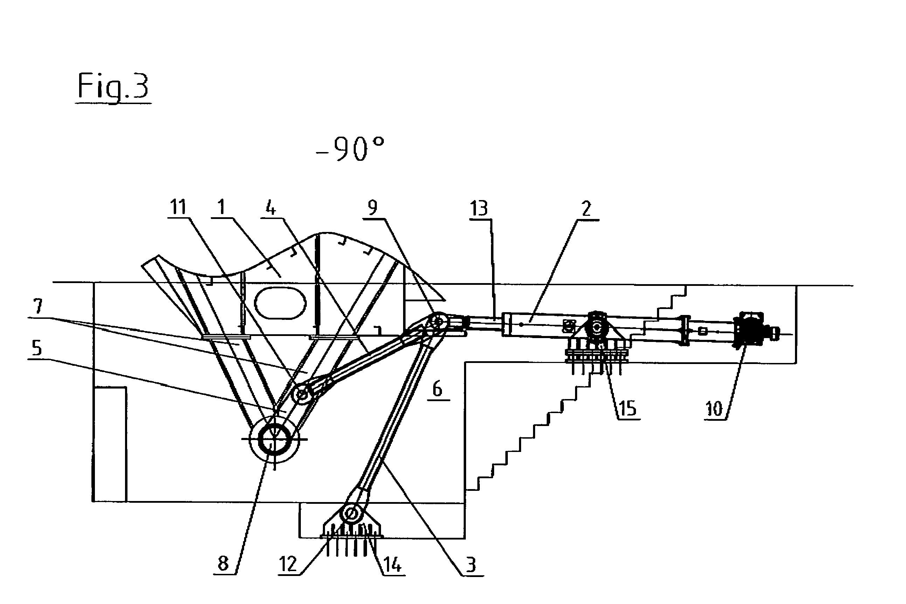

Die drehbare Antriebswelle 8 und die Verbindung des Führungsstabes 3 zum Lagerbock 14 sowie die Anordnung des Linearantriebes 2 im Lagerblock 15 gewährleisten, dass mittels eines Bewegungshubes des Linearantriebes 2 das Segmenttor 1 aus seiner geschlossenen Stellung in die gewünschten anderen Positionen verbracht werden kann, wie nachfolgend näher erläutert und in den Figuren 2 und 3 gezeigt. Ausgehend von der Grundposition des Kurbelgetriebes 6 wie in Figur 1 gezeigt, wird bei Ansteuerung des Linearantriebes 2 die Schubstange 13 ausgefahren, wirkt auf die im Gelenkpunkt 9 angeschlossene Koppelstange 4 und den Führungsstab 3 des Kurbelgetriebes 6, so dass diese Linearbewegung umgelenkt sowie weitergeleitet wird über die Koppelstange 4 und den Führungsstab 3. Die Verbindung der Koppelstange 4 zum Hebel 5 bewirkt die Krafteinleitung auf die Antriebswelle 8 und infolge der festen Verbindung der Tragarme 7 zum Segmenttor 1 wird dieses in einem Bewegungshub des Kurbelgetriebes 6 in eine andere gewünschte Position verbracht, so nach unten in seine geöffnete Position, wie in Figur 2 gezeigt.

Soll das Segmenttor 1 wieder in seine Schließposition verbracht werden, erfolgt die Umsteuerung des Linearantriebes 2, die Bewegungsabläufe der Schubstange 13, der Koppelstange 4 und des Führungsstabes 3 laufen nun in umgekehrter Folge ab und die feste Verbindung des Kurbelgetriebes 6 zur Antriebswelle 8 bewirkt dabei, dass das Segmenttor um 90 ° nach oben in seine Schließposition verbracht wird, wie in Figur 1 dargestellt.

Eine weitere Arbeitsposition des Segmenttores 1 ist in der Darstellung nach Figur 3 dargestellt, hier die Revisionsstellung des Segmenttores 1. Ausgehend von der Arbeitsposition des Segmenttores 1 - geschlossen - erfolgt die Ansteuerung des Linearantriebes 2 entgegen der Richtung wie zur Figur 2 beschrieben, das heißt die Schubstange 13 des Linearantriebes 2 wird nach rechts bewegt und weitestgehend eingefahren. Im Rahmen dieses Bewegungshubes werden der Führungsstab 3 und die Koppelstange 4 gleichfalls nach rechts verschwenkt und infolge dieses Verschwenkens und der festen Verbindung der Koppelstange 4 über den Hebel 5 zur Antriebswelle 8 wird das Segmenttor 1 nach oben in die Revisionsstellung verschwenkt und nimmt die in Figur 3 dargestellte Position ein.

Das Zurückverbringen des Segmenttores 1 in seine Schließstellung erfolgt durch Umsteuerung des Linearantriebes 2 und somit auf die Bewegungsabläufe der Funktionselemente des Kurbelgetriebes 6. Dabei wirkt die Schubstange 13 auf die im Gelenkpunkt 9 verbundenen Koppelstange 4 und den Führungsstab 3. Die auf den Führungsstab 3 wirkende Kraft wird über den Lagerbock 14 auf das Fundament abgeleitet, die auf die Koppelstange 4 eingebrachte Kraft wird auf den Hebel 5 übertragen, vom Hebel 5 über die Antriebswelle 8 auf die Tragarme 7 weitergeleitet und infolge der Verbindung der Funktionselemente des Kurbelgetriebes 6 wird, wie bei jeder anderen Verstellung/Verschwenkvorgang auch, das Segmenttor 1 in die angesteuerte Position verbracht.

In einer zweiten Ausführung der Ausbildung des Kurbelgetriebes 6 sind die Schubstange 13 des Linearantriebes 2, der Führungsstab 3 und die Koppelstange 4 über Koppelelemente 16; 17; 18; 19 gelenkig miteinander verbunden, wobei die Koppelelemente 16; 17; 18; 19 je nach Ausführung an der Koppelstange 4, am Führungsstab 3 oder an der Schubstange 13 fest angeordnet sind. Die beiden nicht fest mit dem jeweiligen Koppelelement 16; 17; 18; 19 verbundenen Funktionselemente des Kurbelgetriebes 6 sind zum betreffenden Koppelelement 16; 17; 18; 19 gelenkig angeordnet, so dass ein Verschwenken des gesamten Systems gegeben ist, um das Segmenttor 1 in die jeweils gewünschte Position zu verbringen.

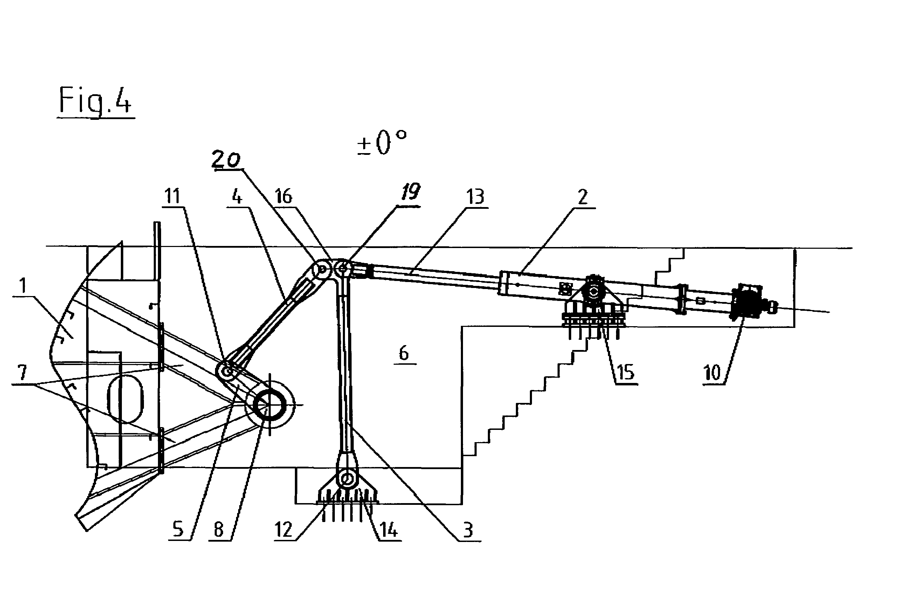

So zeigt die Figur 4 die Ausbildung eines Koppelelementes 16 und dessen feste Zuordnung zum Führungsstab 3. Am Koppelelement 16 sind gelenkig über die Gelenkpunkte 19; 20 die Schubstange 13 und der Führungsstab 4 angeordnet.

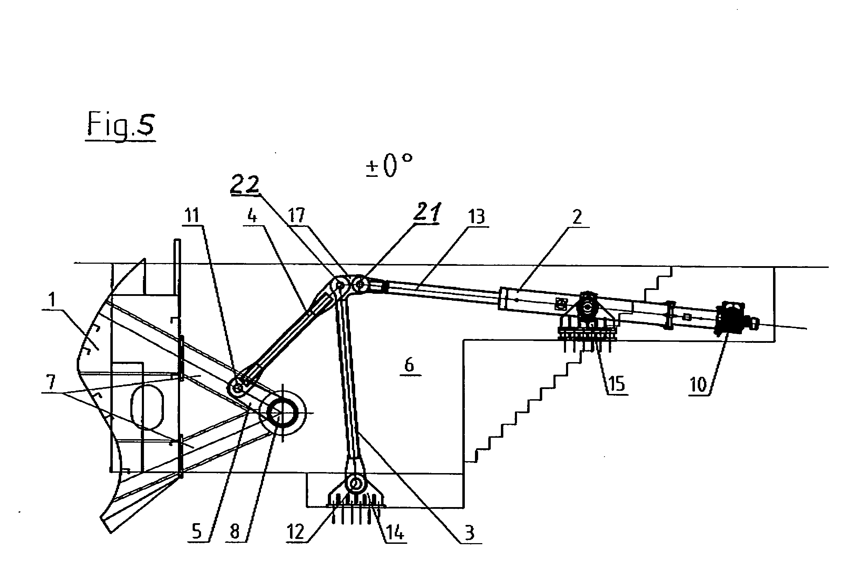

Eine weitere feste Anordnung eines Koppelelementes 17 zum Führungsstab 3 ist in der Figur 5 gezeigt, in der gleichfalls dargestellt ist, dass die Schubstange 13 über den Gelenkpunkt 21 und der Führungsstab 4 über den Gelenkpunkt 22 gelenkig am Koppelelement 17 angeordnet sind.

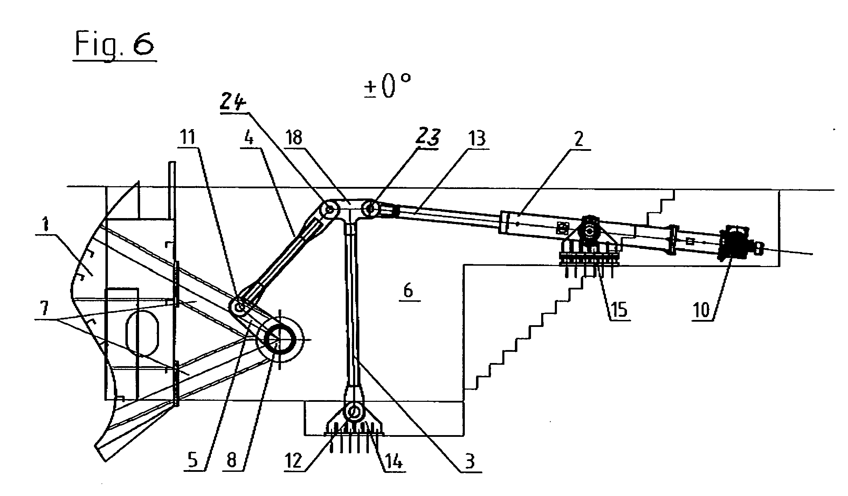

Eine weitere Ausführung der Verbindung und Anordnung von Koppelelement 18 und den Funktionselementen Koppelstange 4, Führungsstab 3 und Schubstange 13 zeigt die Figur 6. Wie dargestellt, ist das Koppelelement 18 fest mit dem Führungsstab 3 verbunden und die Schubstange 13 sowie die Koppelstange 4 sind gelenkig über die Gelenkpunkte 23; 24 zum Koppelelement 18 verbunden.

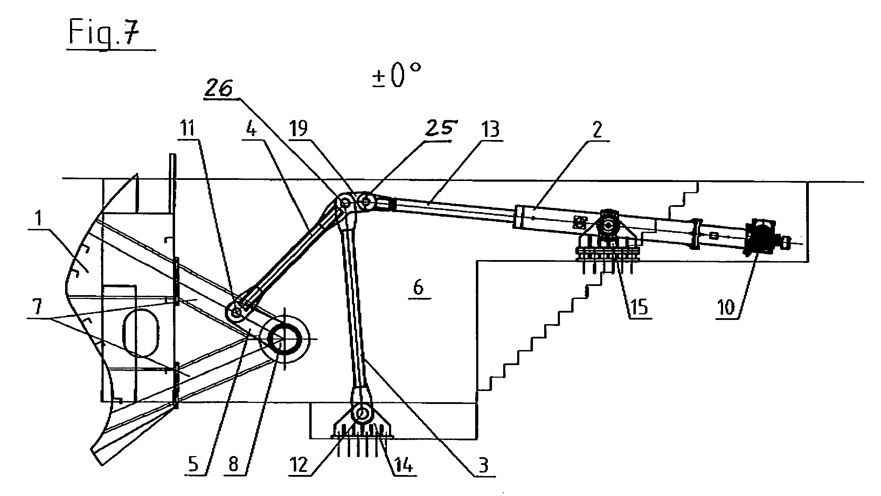

Figur 7 zeigt die Ausbildung eines Koppelelementes 19 und dessen feste Verbindung zur Koppelstange 4 und es wird gleichfalls dargestellt, dass die Schubstange 13 über den Gelenkpunkt 25 und der Führungsstab 3 über den Gelenkpunkt 26 mit dem Koppelelement 19 verbunden sind.

Ergänzend soll dargelegt werden, dass die beschriebenen Verbindungsarten, wie in den Figuren 4 bis 7 dargestellt, gleichfalls zutreffend sind für die anderen Verstellpositionen des Segmenttores 1. Dies betrifft sowohl die geöffnete Position, die Revisionsposition oder jede andere gewünschte Verstellposition des jeweiligen Segmenttores 1.

## Patentansprüche

1. Antriebssystem von Segmenttoren für Tröge von Schiffshebewerken, Schleusenkammern und Rückhaltebecken, bei dem die Funktionselemente des Antriebes in einem Arbeitsraum seitlich vom Schiffstrog/Schleusenkammer/Rückhaltebecken vorgesehen, über eine Antriebswelle mit dem jeweiligen Segmenttor verbunden sind und bei Ansteuerung des Antriebssystems das Segmenttor in die Arbeitspositionen - Segmenttor geschlossen -, -Segmenttor geöffnet -, - Segmenttor in Revisionsstellung -, -Segmenttor in Zwischenposition - verschwenkbar ist, **gekennzeichnet durch**
ein aus einem Linearantrieb (2), einem Führungsstab (3), einer Koppelstange (4) und einem Hebel (5) bestehendes Kurbelgetriebe (6), wobei das Kurbelgetriebe (6) über den Hebel (5) und das Segmenttor (1) über Tragarme (7), welche fest am Segmenttor (1) angeordnet sind, drehfest mit der Antriebswelle (8) des Segmenttores (1) verbunden sind, wobei die Schubstange (13) vom Linearantrieb (2), die Koppelstange (4) sowie der Führungsstab (3) gelenkig verbunden sind, der Führungsstab (3) im Lagerbock (14) und die Koppelstange (4) schwenkbar am Hebel (5) angeordnet sind und das Segmenttor (1) in einem Bewegungshub des Kurbelgetriebes (6) in die jeweils gewünschte Arbeitsposition verbracht wird.

2. Antriebssystem nach Anspruch 1,
**dadurch gekennzeichnet,**
**dass** die Koppelstange (4), der Führungsstab (3) und die Schubstange (13) des Antriebssystems (6) in einem Gelenkpunkt (9) verbunden sind.

3. Antriebssystem nach Anspruch 1,
**dadurch gekennzeichnet,**
**dass** die Koppelstange (4), der Führungsstab (3) und die Schubstange (13) mittels Koppelelementen (16; 17; 18; 19) verbunden sind.

4. Antriebssystem nach einem der Ansprüchen 1 bis 3,
**dadurch gekennzeichnet,**
**dass** der Linearantrieb (2) fest und schwenkbar um seine Achse im Lagerbock (15) angeordnet ist.

5. Antriebssystem nach den Ansprüchen 1 bis 4,
**dadurch gekennzeichnet,**
**dass** der Hebel (5) mit der Antriebswelle (8) des Segmenttores (1) fest und im Gelenkpunkt (11) gelenkig mit der Koppelstange (4) verbunden ist.

6. Antriebssystem nach den Ansprüchen 1 bis 5,
**dadurch gekennzeichnet,**
**dass** der Führungsstab (3) im Gelenkpunkt (12) des Lagerbockes (14) gelenkig angeordnet ist.

7. Antriebssystem nach Anspruch 3,
**dadurch gekennzeichnet,**
**dass** das Koppelelement (16) fest am Führungsstab (3), die Koppelstange (4) und die Schubstange (13) in Gelenkpunkten (20; 19) am Koppelelement (16) angeordnet sind.

8. Antriebssystem nach Anspruch 3,
**dadurch gekennzeichnet,**
**dass** das Koppelelement (17) fest am Führungsstab (3) und die Koppelstange (4) und die Schubstange (13) in Gelenkpunkten (22; 21) am Koppelelement (17) angeordnet sind.

9. Antriebssystem nach Anspruch 3,
**dadurch gekennzeichnet,**
**dass** das Koppelelement (18) fest am Führungsstab (3) und die Koppelstange (4) und die Schubstange (13) in Gelenkpunkten (24; 23) am Koppelelement (18) angeordnet sind.

10. Antriebssystem nach Anspruch 3,
**dadurch gekennzeichnet,**
**dass** das Koppelelement (19) fest an der Koppelstange (4) und die Schubstange (13) und der Führungsstab (9) in Gelenkpunkten (26; 25) angeordnet sind.
